# EUROPÄISCHE PATENTSCHRIFT

(11) **EP 1 451 028 B1**
(45) Veröffentlichungstag und Bekanntmachung des Hinweises auf die Patenterteilung: **13.04.2005**
(21) Anmeldenummer: 02787887.5
(22) Anmeldetag: 30.11.2002
(51) Int. Cl.: B60C 25/00, B60C 25/05

(54) **VORRICHTUNG ZUR REIFENSITZOPTIMIERUNG**
DEVICE FOR OPTIMIZING BEAD SEATING
DISPOSITIF PERMETTANT D'OPTIMISER L'APPUI D'UN TALON DE PNEU SUR LA JANTE

(30) Priorität: 05.12.2001 DE 10159766
(43) Veröffentlichungstag der Anmeldung: 01.09.2004
(73) Patentinhaber: AUDI AG, 85045 Ingolstadt (DE)
(72) Erfinder: SCHMATZ, Heinz-Werner, 85051 Ingolstadt (DE); SEYBERTH, Karl, 91171 Greding (DE)
(74) Vertreter: Geissler, Manfred
(86) Internationale Anmeldenummer: PCT/EP2002/013550
(87) Internationale Veröffentlichungsnummer: WO 2003/047891

(56) Entgegenhaltungen:
- DE-A- 3 723 767
- DE-A- 4 006 182
- PATENT ABSTRACTS OF JAPAN vol. 013, no. 340 (M-857), 31. Juli 1989 (1989-07-31) & JP 01 115712 A (NISSAN MOTOR CO LTD), 9. Mai 1989 (1989-05-09)
- PATENT ABSTRACTS OF JAPAN vol. 005, no. 087 (M-072), 6. Juni 1981 (1981-06-06) & JP 56 034510 A (SUMITOMO RUBBER IND LTD), 6. April 1981 (1981-04-06)

## Beschreibung

Die Erfindung betrifft eine Vorrichtung zur Reifensitzoptimierung nach dem Oberbegriff des Anspruch 1.

Es ist bekannt, dass es bei der Montage von Reifen auf Fahrzeugfelgen vereinzelt zu Lufteinschlüssen zwischen den Reifenkanten und dem Felgenbett kommen kann. Ein nachfolgendes Auswuchten solcher Fahrzeugräder wird mit diesen Lufteinschlüssen durchgeführt. Nach einem Entweichen solcher Lufteinschlüsse, insbesondere in einem anschließenden Fahrbetrieb mit Reifenbelastungen bei Kurvenfahrten, kann dies zu unerwünschten Unwuchten führen. Dies ist besonders nach einer Auslieferung von Neufahrzeugen ungünstig und stellt einen, wenn auch relativ seltenen Qualitätsmangel dar, der ein Nachwuchten in einer Werkstatt erfordert. Vorrichtungen zur Beseitigung solcher Lufteinschlüsse sind bereits bekannt.

Eine bekannte Vorrichtung zur Reifensitzoptimierung (DE 40 06 182 A1) besteht aus je zwei unteren und zwei oberen Andruckrädern, die die Drehung eines Fahrzeugrades herbeiführen. Zugleich wird das Fahrzeugrad durch die vier Andruckräder in seiner Position gehalten. Die Drehachse des Fahrzeugrades ist dabei horizontal. Zum Vorgang der Reifensitzoptimierung werden an die beiden Reifenseiten des Fahrzeugrads Seitenklemmscheiben eingedrückt, die eine Deformierung der Reifenseiten hervorrufen. Dadurch wird der Reifensitz dementsprechend optimiert, dass die beiden Reifenkanten jeweils ohne Lufteinschlüsse umlaufend im Felgenbett zur Anlage kommen.

Der komplette Aufbau der gattungsgemäßen Vorrichtung umfasst ein Unterteil, ein Oberteil und einen als Verbindungsteil dazwischen angeordneten Ständer. Mittels des Ständers ist das Oberteil vertikal gegenüber dem Unterteil verschiebbar. An der Oberseite des Unterteils sind zwei Andruckräder angeordnet, ebenso an der Unterseite des Oberteils. Der Durchmesser der Andruckräder ist im Vergleich zum Durchmesser des Fahrzeugrades sehr klein. Eine Schwenkbewegung der Andruckräder ist nicht vorgesehen. Ebenso wenig kann das Fahrzeugrad aus seiner Drehachse heraus geschwenkt werden. Das Oberteil der Vorrichtung ist horizontal nach hinten von einer Gebrauchsstellung in eine Nichtgebrauchsstellung verschiebbar, um ausreichend Freiraum zur Bestückung der Vorrichtung bzw. Entnahme des sitzoptimierten Reifens zu schaffen.

Um ein Fahrzeugrad zu optimieren muss dieses in der Vorrichtung auf die beiden Andruckräder des Unterteils mit horizontaler Drehachse gestellt werden. Der nächste Arbeitsschritt ist das Oberteil von seiner Nichtgebrauchsstellung in seine Gebrauchsstellung zu bringen. Um das Fahrzeugrad in seiner Optimierungsposition zu fixieren wird das Oberteil vertikal in Richtung des Unterteils verschoben, bis die Andruckräder an der Unterseite des Oberteils das in die Vorrichtung eingestellte Fahrzeugrad berühren und somit dieses ortsfest halten. Mittels einer Antriebsvorrichtung im Unterteil der Vorrichtung werden die Andruckräder des Unterteils angetrieben und das Fahrzeugrad in eine Drehbewegung versetzt. Jetzt werden die beiden Seitenklemmscheiben mittels einer hydraulischen Steuerung an die Reifenseiten des Fahrzeugrades herangedrückt und diese damit deformiert. Dadurch soll eine normale Kurvenfahrt simuliert und somit eine Reifensitzoptimierung gewährleistet werden. Um das Fahrzeugrad aus der Vorrichtung entnehmen zu können muss das Oberteil zuerst vertikal nach oben und dann horizontal nach hinten in seine Nichtgebrauchsstellung gebracht werden.

Damit dauert der gesamte Sitzoptimierungsvorgang für ein Fahrzeugrad inklusive der Bestückung der Vorrichtung und der Entnahme so lange, dass die gattungsgemäße Vorrichtung zumindest für einen Einsatz bei einem Fahrzeughersteller mit hohen Fahrzeugrad-Stückzahlen nicht geeignet erscheint. Aufgrund der stehenden Positionierung des Fahrzeugrades in der Vorrichtung ist zudem immer ein Werker nötig, der nach der Bestückung der Vorrichtung das Fahrzeugrad in seiner Position hält, da eine ortsfeste Fixierung des Fahrzeugrades erst nach Erreichen der Gebrauchsstellung des Oberteils der Vorrichtung sichergestellt ist. Eine Automatisierung des Optimierungsvorganges ist nicht vorgesehen.

In einer weiter bekannten Prüfvorrichtung (DE 37 23 767 C2) ist ein zu prüfendes Fahrzeugrad an einer Achse drehbar gelagert. Diese Achse ist vertikal verschiebbar, so dass die Fahrzeugrad-Lauffläche in Kontakt mit der Andruckrad-Lauffläche zu bringen ist. Mittels einer Antriebseinrichtung ist das Andruckrad in eine Drehbewegung versetzbar. Die Fahrzeugrad-Achse und die Andruckrad-Achse sind achsparallel ohne Verstellmöglichkeit angeordnet. Die Ausrichtung der Achsen ist horizontal. Eine aufwendige Messeinrichtung in der Fahrzeugrad-Achse ermöglicht eine Messung der entstehenden Radial- und Axialkräfte am Fahrzeugrad. Die Auslegung und Gestaltung der Vorrichtung erfüllt nur die Aufgabe eines Reifenprüfstandes für einzelne Testreifen. Für eine Reifensitzoptimierung insbesondere an vielen Fahrzeugrädern ist diese Vorrichtung nicht ausgelegt.

Eine bekannte gattungsgemäße Vorrichtung zur Reifensitzoptimierung (JP 01115712 A) besteht aus einer Aufnahme in der das Fahrzeugrad drehbar gelagert ist und aus einem Andruckrad als Abrollunterlage welches mittels einer steuerbaren Verschiebeeinrichtung zum Fahrzeugrad hin verlagerbar ist. Kurvenfahrten können mit einer solchen Vorrichtung nicht simuliert werden.

Aufgabe der Erfindung ist es, die vorstehende gattungsgemäße Vorrichtung zur Reifensitzoptimierung dahingehend zu verbessern, dass der Reifen auf der entsprechenden Felge einen verbesserten Sitz aufweist und somit negative Auswirkungen auf das Laufverhalten vermieden werden.

Diese Aufgabe wird mit den kennzeichnenden Merkmalen des Anspruchs 1 gelöst.

Gemäß Anspruch 1 weist eine Vorrichtung zur Reifensitzoptimierung eine steuerbare Schwenkvorrichtung auf mittels der das Andruckrad um eine Schwenkachse schwenkbar ist, wobei die Schwenkachse bezüglich des Andruckrades radial und auf die Laufkontaktfläche gerichtet ist.

Vorteilhaft kann damit das Fahrzeugrad bezüglich seines Reifensitzes optimiert werden, wobei negative Auswirkungen auf das Laufverhalten vermieden werden. Dazu wird an der Laufkontaktfläche ein Kontakt zur Fahrbahn simuliert und durch die Schwenkbewegung der Schwenkvorrichtung wird zusätzlich eine Kurvenfahrt simuliert. Durch diese Bewegung wird der Reifensitz auf der Felge insbesondere so beansprucht, dass etwaige, bei der Montage des Reifens auf die Felge umlaufend im Bereich des Felgenbettes entstandenen Lufteinschlüsse, beseitigt werden. Nach einem noch folgenden Auswuchtvorgang ist somit ein langer einwandfreier runder Lauf des Fahrzeugrades gewährleistet.

Mit der vorstehenden Vorrichtung zur Reifensitzoptimierung ist eine nachfolgend angegebene Weiterbildung zu einer automatisierten Vorrichtung für große Stückzahlen von Fahrzeugreifen einfach möglich.

In einer bevorzugten Weiterbildung der Vorrichtung gemäß Anspruch 2 ist das Andruckrad mit einem Andruckrad-Antrieb in der als Schwenkaufnahmeteil ausgeführten Schwenkvorrichtung angeordnet. Dieses Schwenkaufnahmeteil ist mittels Rollen in einer Schwenkkulisse auf einer Kreissegmentbahn mittels eines steuerbaren Stellgliedes schwenkbar. Die Schwenkkulisse ist in einem Kulissenführungsteil angeordnet, mittels der Rollen wird das Schwenkaufnahmeteil auf der Kreissegmentbahn in der Schwenkkulisse im Kulissenführungsteil geführt. Der Mittelpunkt der Kreissegmentbahn liegt auf der Schwenkachse. Eine solche Schwenkanordnung ist relativ kostengünstig herstellbar und im Platzbedarf gut in die Vorrichtung integrierbar. Zudem sind die auftretenden Kräfte damit in geeigneter Weise beherrschbar und steuerbar.

In einer alternativen Ausführungsform gemäß Anspruch 3 ist das Andruckrad mit dem Andruckrad-Antrieb in der als Schwenklagerteil ausgeführten Schwenkvorrichtung angeordnet. Das Schwenklagerteil ist mittels eines steuerbaren Stellgliedes um eine Schwenklager-Achse schwenkbar. Die dem Schwenklagerteil zugeordnete Schwenklager-Achse ist senkrecht zur Andruckrad-Achse angeordnet. Auch mit dieser alternativen Ausführungsform der Schwenkvorrichtung ist eine relativ kostengünstige und gut in die gesamte Vorrichtung integrierbare Schwenkanordnung geschaffen. Ebenso ist hier mittels des Stellgliedes eine geeignete Steuerung der Vorrichtung möglich.

Das Stellglied für die Schwenkbewegung des Schwenkaufnahmeteils wird gemäß Anspruch 4 als eine steuerbare pneumatische oder hydraulische Zylinder-Kolbeneinrichtung ausgeführt. Alternativ dazu ist eine steuerbare Elektromotoreinrichtung in Anspruch 5 vorgeschlagen. Solche Stellglieder stehen in einer Vielzahl geeigneter Ausführungsformen auf dem Markt zur Verfügung.

Gemäß Anspruch 6 ist die Schwenkvorrichtung in einer verschiebbaren Verschiebeeinrichtung angeordnet. Die Verschieberichtung steht senkrecht zu den parallelen Ebenen der Andruckrad-Achse und der Fahrzeugrad-Achse. Damit werden schnell ausführbare Verschiebungen mit kurzen Verschiebewegen erreicht.

Eine vorzugsweise Ausführung der Verschiebeeinrichtung ist gemäß Anspruch 7 als Schlitten ausgeführt. Auf seitlichen Schienenführungen ist der Schlitten gegenüber einem Basisgestell verschiebbar. Damit wird eine stabile, für die auftretenden Belastungen gut geeignete, leicht laufende und einfach steuerbare Verschiebeeinrichtung vorgeschlagen.

Mittels Kraftmesseinrichtungen ist das Kulissenführungsteil gemäß Anspruch 8 in der Verschiebeeinrichtung aufgenommen. So werden die entstehenden Radial- und Axialkräfte am Andruckrad und damit die entstehenden Reaktionskräfte am Reifen messbar und sind als steuerungsrelevante Kenngrößen zur Steuerung der Reifensitzoptimierung verwendbar. Insbesondere können damit vorgegebene Grenzwerte für eine zulässige Reifenbelastung selbsttätig berücksichtigt werden.

Gemäß Anspruch 9 ist die Verschiebeeinrichtung und/oder die Schwenkvorrichtung in ihren Maximalauslenkungen mittels mechanischen Anschlägen begrenzt. Zusätzlich oder alternativ zur vorstehenden kraftabhängigen Steuerung ist damit eine Missbrauchstellung der Vorrichtung, die im schlimmsten Fall zu einer Zerstörung des zu optimierenden Fahrzeugrades führt, ausgeschlossen.

Der Durchmesser des Andruckrades entspricht nach Anspruch 10 wenigstens dem Durchmesser des Fahrzeugrades. Vorzugsweise ist der Durchmesser des Andruckrades etwas größer als der des Fahrzeugrades auszuführen. Damit wird eine für eine effektive Reifensitzoptimierung ausreichend große Laufkontaktfläche erhalten, die etwa der betriebsmäßigen Reifenaufstandsfläche entspricht. Grundsätzlich ist aber jeder Durchmesser des Andruckrades möglich.

Um eine Automatisierung der Vorrichtung herstellen zu können sind gemäß Anspruch 11 zwei vorzugsweise drei Aufnahmen für jeweils ein Fahrzeugrad vorhanden. Eine Transporteinrichtung verbindet die drei Aufnahmen. Jede Aufnahme ist dergestalt ausgeführt, dass eine Spindellagerung das Fahrzeugrad aufnimmt. Damit ist eine automatische Zentrierung des Fahrzeugrades in der Aufnahme gewährleistet. Die Drehachse des Fahrzeugrades ist vertikal ausgerichtet. Durch die liegende Positionierung der Fahrzeugräder in den Aufnahmen ist eine einfache, insbesondere auch roboterunterstützte Bestückung der Vorrichtung möglich.

Eine weitere bevorzugte Ausführungsform ist in Anspruch 12 vorgeschlagen. Bei den drei Aufnahmen für jeweils ein Fahrzeugrad sind drei unterschiedliche Arbeitsvorgänge vorgesehen. In Station I wird die Aufnahme mit einem nicht optimierten Fahrzeugrad bestückt. Mittels der Transporteinrichtung wird das nicht optimierte Fahrzeugrad zur Station II transportiert. Dort findet die vorbeschriebene Reifensitzoptimierung des Fahrzeugrades statt. Danach findet ein Weitertransport des Fahrzeugrades zur Station III statt, in der das Fahrzeugrad entnehmbar ist. Nach der Reifensitzoptimierung ist ein einmaliges Auswuchten des Fahrzeugrades für optimale Laufeigenschaften desselben ausreichend. Eine etwaige, im Fahrbetrieb entstehende Unwucht, die durch entweichende Lufteinschlüsse zwischen Reifen und Felgenbett entstehen könnte, ist hiermit ausgeschlossen. Mit einer robotergesteuerten Zusatzanordnung können Station I und Station III problemlos beladen bzw. entladen werden, so dass eine hohe Geschwindigkeit der Reifensitzoptimierung möglich ist.

Um einen einwandfreien, reproduzierbaren Optimierungsvorgang zu erhalten, ist das Fahrzeugrad in Station II ortsfest und drehbar gehalten. Gemäß Anspruch 13 ist das Fahrzeugrad mittels einer steuerbaren Fixiereinrichtung auf einfache Weise während des Optimierungsvorgangs in Station II fixiert.

Zur Vergrößerung der Effektivität der Vorrichtung zur Reifensitzoptimierung sind Station I bis III gemäß Anspruch 14 beidseitig des Andruckrades angeordnet. Das Andruckrad ist mittels der Verschiebeeinrichtung wechselseitig zwischen den beidseitigen Stationen II verschiebbar. So wird während des Optimierungsvorgangs auf Seite A auf Seite B ein bereits optimiertes Fahrzeugrad von Station II zu Station III weitertransportiert und gleichzeitig wird Station II von Station I aus mit einem zu optimierenden Fahrzeugrad bestückt. Nach Beendigung des Optimierungsvorganges auf Seite A verschiebt sich die Verschiebeeinrichtung zu Seite B und beginnt dort den Optimierungsvorgang des Fahrzeugrades in Station II. Zeitgleich wechselt auf Seite A die Bestückung der Stationen, so dass das nächste zu optimierende Fahrzeugrad in Station II zu liegen kommt. Somit ist durch diese beidseitige Anordnung auf eine einfache und kostengünstige Weise eine Verdoppelung der Stückzahl der zu optimierenden Fahrzeugräder möglich.

Mittels einer zentralen Schalteinrichtung ist es gemäß Anspruch 15 möglich in einem ersten Steuerungsschritt eine Verschiebung der Verschiebeeinrichtung zur Herstellung eines Kontaktes zwischen der Andruckrad-Lauffläche und der Fahrzeugrad-Lauffläche an der Laufkontaktfläche durchzuführen. Die Verschiebung ist mit einem vorbestimmten, messtechnisch erfassten Anpressdruck gesteuert. Mit wenigstens einem weiteren Steuerungsschritt ist die Verschwenkung durchführbar. Dabei wird mittels des Stellgliedes die Schwenkvorrichtung um die Schwenkachse geschwenkt. Ein maximaler Schwenkwinkel ist vordefiniert und messtechnisch erfassbar.

Somit ist eine vollautomatische Vorrichtung zur Reifensitzoptimierung beansprucht, die die geforderten Stückzahlen an zu optimierenden Fahrzeugrädern optimieren kann.

Anhand einer Zeichnung wird ein Ausführungsbeispiel der Erfindung näher erläutert.

Es zeigen:
- Fig. 1: eine schematische Draufsicht auf eine Vorrichtung zur Reifensitzoptimierung,
- Fig. 2: eine schematische Seitenansicht auf einen Teil der Vorrichtung nach Fig. 1 mit einem Andruckrad in einer Schwenkvorrichtung in einer Verschiebeeinrichtung, und
- Fig. 3: eine schematische Seitenansicht auf ein Schwenklagerteil.

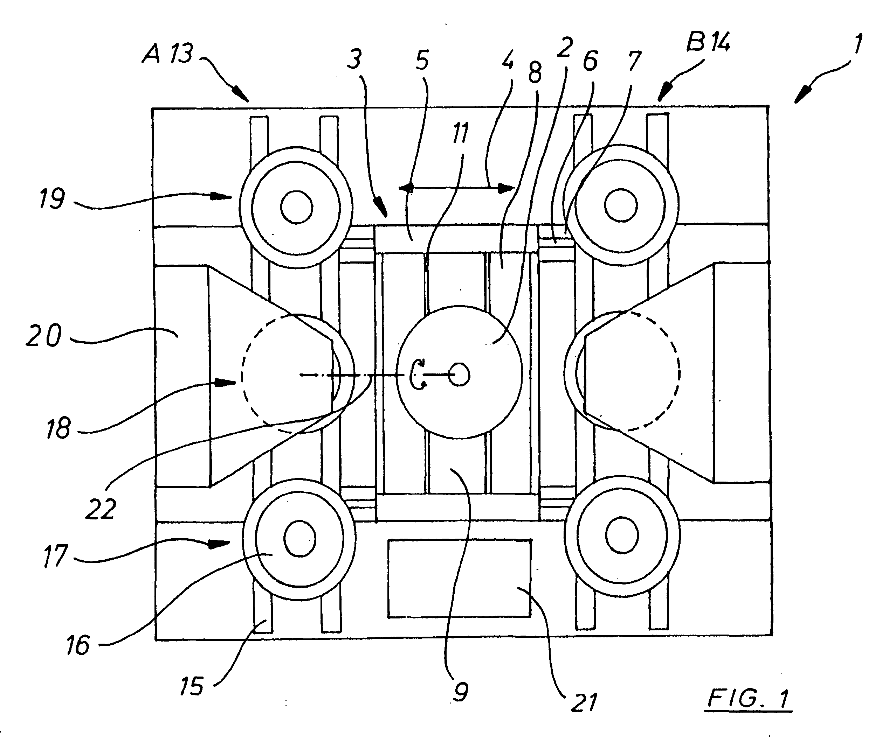

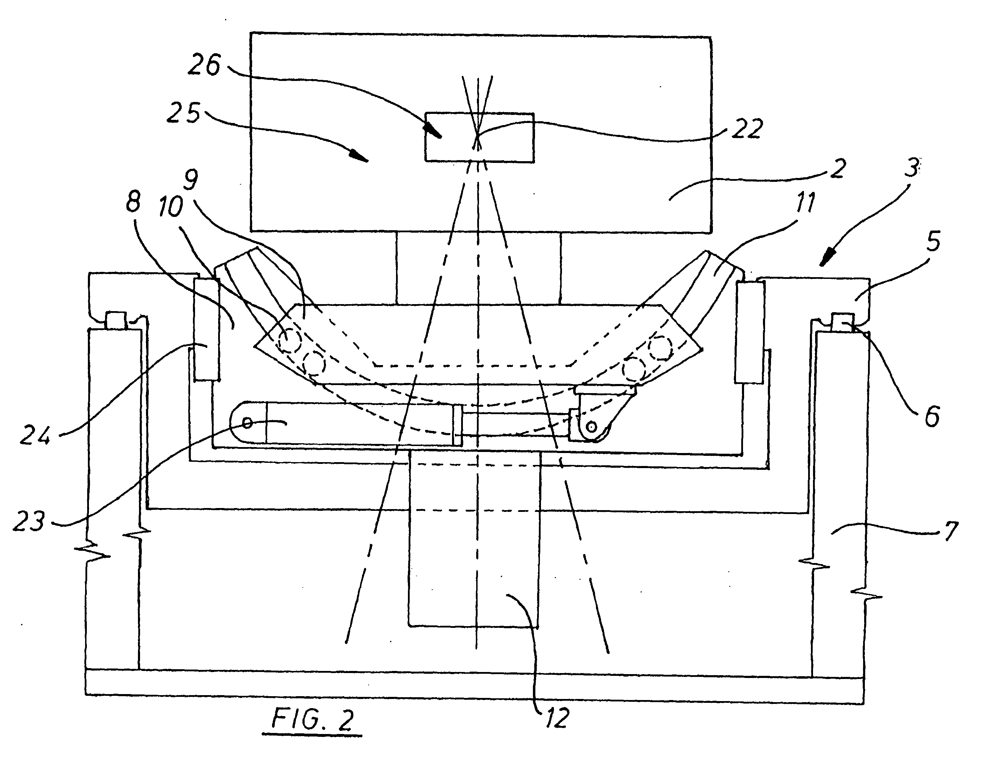

In Fig. 1 ist eine Draufsicht einer Vorrichtung zur Reifenoptimierung 1 dargestellt. Diese besteht aus einem Andruckrad 2, das an einer Verschiebeeinrichtung 3 angeordnet ist. Die Verschieberichtung ist mittels eines Doppelpfeils 4 dargestellt. Die Verschiebeeinrichtung 3 besteht aus einem Schlitten 5 der auf einer Schienenführung 6 gegenüber einem Basisgestell 7 in der Verschieberichtung 4 verschiebbar ist. An dem Schlitten 5 ist ein Kulissenführungsteil 8 angeordnet. Wie in Fig. 2 im Detail gezeigt ist an diesem ein Schwenkaufnahmeteil 9 mittels Rollen 10 in einer als Kreissegmentbahn ausgeführten Schwenkkulisse 11 schwenkbar angeordnet. Unterhalb des Andruckrades 2, in Fig. 1 nicht sichtbar, ist ein Andruckrad-Antrieb 12 angeordnet, durch den das Andruckrad 2 in eine Drehbewegung versetzbar ist. Seitlich des Andruckrades 2 ist auf Seite A 13 eine Transporteinrichtung 15 mit drei Aufnahmen für jeweils ein Fahrzeugrad 16 dargestellt mit einer Transporteinrichtung senkrecht zur Verschieberichtung 4. Die Drehachse jeder Aufnahme ist vertikal ausgerichtet und befindet sich in einer parallelen Ebene zur Drehachse des Andruckrades 2. Jeder Aufnahme ist ein anderer Arbeitsvorgang zugewiesen, so dass in der Reihenfolge der Arbeitsfortschritte eine Station I 17, eine Station II 18 und eine Station III 19 vorgesehen sind. Bei Station II 18 ist eine steuerbare Fixiereinrichtung 20 angeordnet. Seite B 14 ist spiegelbildlich zu Seite A 13 aufgebaut. Mittels einer zentralen Steuereinrichtung 21 ist die Vorrichtung zur Reifensitzoptimierung vollautomatisch steuerbar.

Fig. 2 zeigt eine schematische Seitenansicht des Andruckrades 2 mit seinem zugeordneter Andruckrad-Antrieb 12. Diese beiden Bauteile bilden zusammen mit dem Schwenkaufnahmeteil 9 eine Baueinheit, die mittels Rollen in der Schwenkkulisse 11 um eine Schwenkachse 22, die senkrecht zur Zeichenebene steht, schwenkbar ist. Die Schwenkkulisse 11 ist an dem Kulissenführungsteil 8 angeordnet und die Schwenkung ist mittels eines Stellgliedes 23, das als steuerbare Zylinder-Kolben-Einheit eine Verbindung zwischen dem Kulissenführungsteil 8 und dem Schwenkaufnahmeteil 9 darstellt, durchführbar. Das Kulissenführungsteil 8 ist über Kraftmesseinrichtungen 24, deren Sensorsignale der Steuereinrichtung zuführbar sind, am Schlitten 5 aufgenommen. Der Schlitten 5 ist mittels der Schienenführung 6 gegenüber dem Basisgestell 7 verschiebbar. Die Verschieberichtung 4 ist parallel zur Schwenkachse 22.

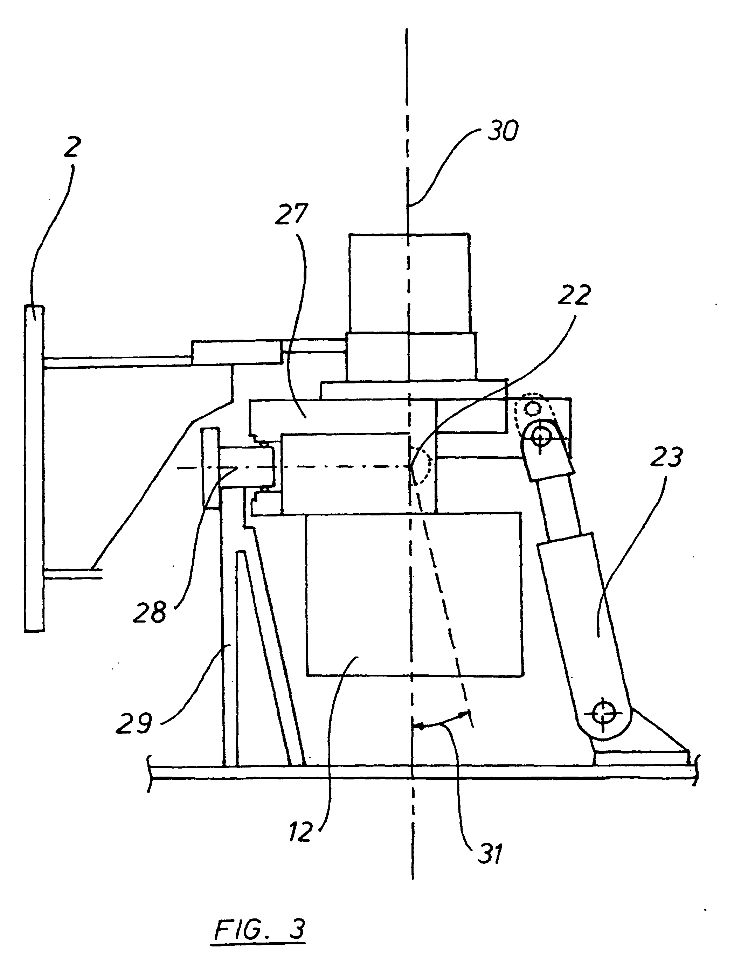

Fig. 3 zeigt eine schematische Seitenansicht eines Schwenklagerteils 27. Die Darstellung zeigt in der linken Hälfte eine wahre Ansicht und die rechte Hälfte ist an der eingezeichneten Mittellinie (entsprechend der Andruckradachse 30) um 90° in die Zeichenebene geklappt. Das Schwenklagerteil 27 ist an einer Schwenklager-Achse 28, die in einer Schwenklager-Achsaufnahme 29 aufgenommen ist, schwenkbar angeordnet. An dem Schwenklagerteil 27 greift ein Stellglied 23 an, mittels dem das Schwenklagerteil schwenkbar ist. In der rechten Hälfte der Darstellung ist strichliert eine ausgefahrene Position des Stellgliedes 23 eingezeichnet, der dann eine Schwenkung des Schwenklagerteils 27 um den Schwenkwinkel 31 zugeordnet ist. Eine Abstützung des Stellgliedes 23 stellt die Schwenklager-Achsaufnahme 29 dar. Das Andruckrad 2 ist mit dem Schwenklagerteil 27 fest verbunden und ist mit diesem um eine Andruckrad-Achse 30 drehbar. Der Andruckrad-Antrieb 12 ist unterhalb des Andruckrades 2 angeordnet. Die Schwenklager-Achsaufnahme 27 ist auf einer Verschiebeeinrichtung mit Kraftmesseinrichtungen angeordnet, wobei dies in Fig. 3 nicht mehr dargestellt ist.

Die Anordnung nach den Fig. 1 und 2 bzw. 3 hat folgende Funktion:
Durch eine gesteuerte Verschiebung des Schlittens 5 und damit des Andruckrades 2 zu einem Fahrzeugrad 16 in der Station II 18 ist ein Kontakt zwischen Andruckrad-Lauffläche 25 und Fahrzeugrad-Lauffläche an der Laufkontaktfläche 26 herstellbar. Mittels des Andruckrad-Antriebs 12 wird das Andruckrad 2 in eine Drehbewegung versetzt und somit auch das Fahrzeugrad 16. Durch das Schwenken des Schwenkaufnahmeteiles 9 bzw. des Schwenklagerteils 27 während des Kontaktes der beiden Laufflächen werden die beiden Radebenen gegeneinander verkippt und eine Kurvenfahrtbelastung an der Laufkontaktfläche 26 im Reifen erzeugt, wodurch der Reifensitz auf der Felge optimiert wird. Eine Steuerung der Verschiebung und der Schwenkung erfolgt mit der zentralen Steuereinrichtung 21, wobei insbesondere, vorgebbare maximale Reifenbelastungen durch Auswertung der Messsignale der Kraftmesseinrichtungen 24 berücksichtigbar sind.

Zur Automatisierung der Vorrichtung zur Reifensitzoptimierung 1 sind an beiden Seiten A und B 13, 14 des Andruckrades 2 die Transporteinrichtungen 15 mit den jeweils drei Aufnahmen für jeweils ein Fahrzeugrad 16 angeordnet. In Station I 17 findet die Bestückung der Vorrichtung mit einem noch zu optimierenden Fahrzeugrad 16 statt. In Station II 18 ist das Fahrzeugrad 16 mittels einer Fixiereinrichtung 20 ortsfest und drehbar für den Optimierungsvorgang gehalten. In Station III 19 das optimierte Fahrzeugrad 16 entnommen. Aufgrund der beidseitigen Anordnung der Stationen I bis III 17, 18, 19 ist eine hohe Durchlaufstückzahl an zu optimierenden Fahrzeugrädern 16 gegeben. Während des Optimierungsvorganges auf Seite A 13 wird mittels der Transporteinrichtung 15 auf Seite B das Fahrzeugrad 16 in den Stationen weitertransportiert. Nach Beendigung des Optimierungsvorganges auf Seite A 13 wird der Schlitten 5 mit dem Andruckrad 2 zur Seite B 14 verschoben und nimmt dort die Optimierung des Fahrzeugrades 16 in Station II 18 vor. Zeitgleich wird auf Seite A 13 das eben optimierte Fahrzeugrad 16 mittels der Transporteinrichtung 15 zu Station III 19 zur Entnahme weitertransportiert und von Station I 17 kommend ein noch zu optimierendes Fahrzeugrad 16 in Station II 18 eingebracht. Mittels der zentralen Steuereinrichtung 21 werden alle zum Optimierungsvorgang nötigen Vorgänge gesteuert.

Die Steuerung der Verschiebung des Schlittens 5, der Schwenkung des Schwenkaufnahmeteiles 9 bzw. des Schwenklagerteils 27 und der Transport der Fahrzeugräder 16 sind Voraussetzung für einen vollautomatischen Optimierungsvorgang. Durch die beidseitige Anordnung der Stationen I 17 bis III 19 ist eine Optimierung einer großen Stückzahl von Fahrzeugrädern 16 in Verbindung mit einer Fahrzeug-Serienproduktion möglich. Mit einer robotergestützten Bestückung der Station I 17 und Entnahme aus Station III 19 ist ein Abarbeitung ohne einen Werker gewährleistet.

## Patentansprüche

1. Vorrichtung zur Reifensitzoptimierung
- mit wenigstens einer Aufnahme für ein zur Reifensitzoptimierung bereitgestelltes Fahrzeugrad (16), das aus einem Luftreifen und einer Felge besteht, wobei das Fahrzeugrad (16) in der Aufnahme drehbar gelagert ist,
- mit einer als Andruckrad (2) ausgeführten Abrollunterlage, wobei das Andruckrad (2) mit einem Andruckrad-Antrieb (12) für eine Drehbewegung antreibbar ist,
- mit einer Anordnung der Andruckrad-Achse und der Fahrzeugrad-Achse in jeweils parallelen Ebenen,
- mit einer steuerbaren Verschiebeeinrichtung (3) zur Relativverschiebung zwischen dem Andruckrad (2) und einem Fahrzeugrad (16), wobei durch die Verschiebung ein Kontakt der Andruckrad-Lauffläche (25) und der Fahrzeugrad-Lauffläche an einer Laufkontaktfläche (26) herstellbar ist, wobei das Fahrzeugrad (16) während des Optimierungsvorgangs ortsfest gehalten ist, und wobei das Andruckrad (2) mittels der Verschiebeeinrichtung (3) gegen das Fahrzeugrad (16) verschiebbar ist,
**dadurch gekennzeichnet,**
- **dass** das Andruckrad (2) mittels einer steuerbaren Schwenkvorrichtung um eine Schwenkachse (22) schwenkbar ist, wobei die Schwenkachse (22) bezüglich des Andruckrades (2) radial und auf die Laufkontaktfläche (26) gerichtet ist.

2. Vorrichtung zur Reifensitzoptimierung nach Anspruch 1, **dadurch gekennzeichnet,**
- **dass** das Andruckrad (2) mit Andruckrad-Antrieb (12) in der als Schwenkaufnahmeteil (9) ausgeführten Schwenkvorrichtung angeordnet ist,
- **dass** das Schwenkaufnahmeteil (9) mittels Rollen (10) in einer Schwenkkulisse (11) auf einer Kreissegmentbahn mittels eines steuerbaren Stellgliedes (23) schwenkbar ist, wobei der Mittelpunkt der Kreissegmentbahn auf der Schwenkachse (22) liegt,
- **dass** die Schwenkkulisse (11) in einem Kulissenführungsteil (8) mittels der Rollen (10) auf der Kreissegmentbahn angeordnet ist,

3. Vorrichtung zur Reifensitzoptimierung nach Anspruch 1, **dadurch gekennzeichnet,**
- **dass** das Andruckrad (2) mit Andruckrad-Antrieb (12) in der als Schwenklagerteil (27) ausgeführten Schwenkvorrichtung angeordnet ist,
- **dass** das Schwenklagerteil (27) mittels eines steuerbaren Stellgliedes (23) um eine Schwenklager-Achse (28) schwenkbar ist,
- **dass** die dem Schwenklagerteil zugeordnete Schwenklager-Achse (28) senkrecht zur Andruckrad-Achse angeordnet ist.

4. Vorrichtung zur Reifensitzoptimierung nach Anspruch 2 oder 3, **dadurch gekennzeichnet, dass** das Stellglied (23) für die Schwenkbewegung des Schwenkaufnahmeteils (9) oder des Schwenklagerteils (27) als steuerbare pneumatische oder hydraulische Zylinder-Kolbeneinrichtung ausgeführt ist.

5. Vorrichtung zur Reifensitzoptimierung nach Anspruch 2 oder 3, **dadurch gekennzeichnet, dass** das Stellglied (23) für die Schwenkbewegung des Schwenkaufnahmeteils (9)oder des Schwenklagerteils (27) als steuerbare Elektromotoreinrichtung ausgeführt ist.

6. Vorrichtung zur Reifensitzoptimierung nach einem der Ansprüche 1 bis 5, **dadurch gekennzeichnet, dass** die Schwenkvorrichtung in einer verschiebbaren Verschiebeeinrichtung (3) angeordnet ist, wobei die Verschieberichtung (4) senkrecht zu den parallelen Ebenen der Andruckrad-Achse und der Fahrzeugrad-Achse ausgerichtet ist.

7. Vorrichtung zur Reifensitzoptimierung nach einem der Ansprüche1 bis 6, **dadurch gekennzeichnet, dass** die Verschiebeeinrichtung (3) als Schlitten (5) ausgebildet ist, der mit einer seitlichen Schienenführung (6) gegenüber einem Basisgestell (7) verschiebbar ist.

8. Vorrichtung zur Reifensitzoptimierung nach einem der Ansprüche 1 bis 7, **dadurch gekennzeichnet, dass** die Schwenkvorrichtung mittels Kraftmesseinrichtungen (24) für die am Andruckrad (2) entstehenden Radial- und Axialkräfte in der Verschiebeeinrichtung (3) aufgenommen ist.

9. Vorrichtung zur Reifensitzoptimierung nach einem der Ansprüche 1 bis 8, **dadurch gekennzeichnet, dass** die Verschiebeeinrichtung (3) und/oder die Schwenkvorrichtung mittels mechanischer Anschläge in ihren Maximalauslenkungen begrenzt sind.

10. Vorrichtung zur Reifensitzoptimierung nach einem der Ansprüche 1 bis 9, **dadurch gekennzeichnet, dass** das Andruckrad (2) im Durchmesser wenigstens so groß, vorzugsweise größer als das zu optimierende Fahrzeugrad (16) ist.

11. Vorrichtung zur Reifensitzoptimierung nach einem der Ansprüche 1 bis 10, **dadurch gekennzeichnet, dass** wenigstens zwei, vorzugsweise drei Aufnahmen für jeweils ein Fahrzeugrad (16) vorhanden sind, die über eine Transporteinrichtung (15) verbunden sind, wobei jede Aufnahme eine Spindellagerung für je ein Fahrzeugrad (16) aufweist und die Drehachse des Fahrzeugrades (16) dabei vertikal ausgerichtet ist.

12. Vorrichtung zur Reifensitzoptimierung nach Anspruch 11, **dadurch gekennzeichnet, dass** drei Aufnahmen für je ein Fahrzeugrad (16) für drei unterschiedliche Arbeitsvorgänge vorgesehen sind, nämlich in der Reihenfolge der Anordnung an der Transporteinrichtung (15) in Station I (17) die Bestückung mit einem nicht optimierten Fahrzeugrad (16), in Station II (18) die Optimierung des Fahrzeugrades (16) und in Station III (19) die Entnahme des optimierten Fahrzeugrades (16).

13. Vorrichtung zur Reifensitzoptimierung nach Anspruch 12, **dadurch gekennzeichnet, dass** an der Station II (18) während des Optimierungsvorgangs über eine steuerbare Fixiereinrichtung (20) das Fahrzeugrad (16) in der Aufnahme ortsfest und drehbar gehalten wird.

14. Vorrichtung zur Reifensitzoptimierung nach Anspruch 12 oder 13, **dadurch gekennzeichnet, dass** die Stationen I (17) bis III (19) beidseitig des Andruckrades (2) angeordnet sind, wobei das Andruckrad (2) mittels der Verschiebeeinrichtung (4) wechselseitig zwischen den beidseitigen Stationen II (18) verschiebbar ist.

15. Vorrichtung zur Reifensitzoptimierung nach einem der Ansprüche 1 bis 14, **dadurch gekennzeichnet,**
**dass** die Steuerung der Vorrichtung zur Reifensitzoptimierung (1) über eine zentrale Steuereinrichtung (21) erfolgt dergestalt,
- **dass** in einem ersten Steuerungsschritt eine Verschiebung zur Herstellung eines Kontaktes an der Laufkontaktfläche (26) mit vorbestimmten, messtechnisch erfasstem Anpressdruck erfolgt und
- **dass** in wenigstens einem weiteren Steuerschritt die Verschwenkung durchführbar ist.

## Claims

1. Device for optimizing the bead seat
- having at least one receptacle for a vehicle wheel (16) which is provided for optimizing the bead seat and which is composed of a pneumatic tyre and a rim, the vehicle wheel (16) being rotatably mounted in the receptacle,
- having an underlying surface for rolling on, said surface being embodied as a contact pressure wheel (2) which can be driven by a contact pressure wheel drive (12) for a rotary movement,
- having an arrangement of the axis of the contact pressure wheel and the axis of the vehicle wheel in respectively parallel planes,
- having a controllable displacement device (3) for bringing about relative displacement between the contact pressure wheel (2) and a vehicle wheel (16), it being possible to bring about contact between the contact pressure wheel tread (25) and the vehicle wheel tread on a tread contact face (26) by means of the displacement, the vehicle wheel (16) being positionally secured during the optimization process and the contact pressure wheel (2) being capable of being displaced against the vehicle wheel (16) by means of the displacement device (3),
**characterized**
- **in that** the contact pressure wheel (2) can be pivoted about a pivot axis (22) by means of a controllable pivot device, the pivot axis (22) being directed radially with respect to the contact pressure wheel (2) and towards the tread contact face (26).

2. Device for optimizing a bead seat according to Claim 1, **characterized**
- **in that** the contact pressure wheel (2) is arranged with the contact pressure wheel drive (12) in the pivoting device which is embodied as a pivoting receptacle part (9),
- **in that** the pivoting receptacle part (9) can be pivoted by means of rollers (10) in a pivoting link (11) on a circular segment path by means of a controllable actuating element (23), the centre point of the circular segment path lying on the pivoting axis (22),
- **in that** the pivoting link (11) is arranged in a link guide part (8) by means of the rollers (10) on the circular segment path.

3. Device for optimizing a bead seat according to claim 1, **characterized**
- **in that** the contact pressure wheel (2) is arranged with the contact pressure wheel drive (12) in the pivoting device which is embodied as a pivoting bearing part (27),
- **in that** the pivoting bearing part (27) can be pivoted about a pivot bearing axis (28) by means of a controllable actuator element (23),
- **in that** the pivot bearing axis (28) which is assigned to the pivoting bearing part is arranged perpendicularly with respect to the axis of the contact pressure wheel.

4. Device for optimizing a bead seat according to Claim 2 or 3, **characterized in that** the actuating element (23) is embodied as a controllable pneumatic or hydraulic cylinder piston device in order to carry out the pivoting movement of the pivoting receptacle part (9) or of the pivoting bearing part (27).

5. Device for optimizing a bead seat according to Claim 2 or 3, **characterized in that** the actuating element (23) is embodied as a controllable electromotor device in order to carry out the pivoting movement of the pivoting receptacle part (9) or of the pivoting bearing part (27).

6. Device for optimizing a bead seat according to one of Claims 1 to 5, **characterized in that** the pivoting device is arranged in a displaceable displacement device (3), the displacement device (4) being oriented perpendicularly to the parallel planes of the axis of the contact pressure wheel and the axis of the vehicle wheel.

7. Device for optimizing a bead seat according to one of Claims 1 to 6, **characterized in that** the displacement device (3) is embodied as a carriage (5) which can be displaced with respect to a base frame (7) using a lateral rail guide (6).

8. Device for optimizing a bead seat according to one of Claims 1 to 7, **characterized in that** the pivoting device is held in the displacement device (3) by means of force-measuring devices (24) for the radial and axial forces which occur at the contact pressure wheel (2).

9. Device for optimizing a bead seat according to one of Claims 1 to 8, **characterized in that** the displacement device (3) and/or the pivoting device are limited in their maximum deflections by means of mechanical stops.

10. Device for optimizing a bead seat according to one of Claims 1 to 9, **characterized in that** the contact pressure wheel (2) is at least as large in diameter as the vehicle wheel (16) to be optimized, and is preferably larger than said wheel.

11. Device for optimizing a bead seat according to one of Claims 1 to 10, **characterized in that** at least two, preferably three receptacles for one vehicle wheel (16) each are provided, said receptacles being connected via a conveying device (15) and each receptacle having a spindle bearing for one vehicle wheel (16) each, and the axis of rotation of the vehicle wheel (16) being oriented vertically here.

12. Device for optimizing a bead seat according to Claim 11, **characterized in that** three receptacles for one vehicle wheel (16) each are provided for three different working processes, specifically in the order of the arrangement on the conveying device (15) at station I (17), the equipping with a non-optimized vehicle wheel (16) in station II (18) the optimization of the vehicle wheel (18) and the removal of the optimized vehicle wheel (16) in station III (19).

13. Device for optimizing a bead seat according to Claim 12, **characterized in that** the vehicle wheel (16) is held in a positionally fixed and rotatable fashion at the station II (18) by means of a controllable securing device (20) during the optimization process.

14. Device for optimizing a bead seat according to Claim 12 or 13, **characterized in that** the stations I (17) to III (19) are arranged on each side of the contact pressure wheel (2), the contact pressure wheel (2) being alternately displaceable between the two stations II (18) by means of the displacement device (4).

15. Device for optimizing a bead seat according to one of Claims 1 to 14, **characterized in that** the device (1) for optimizing a bead seat is controlled by means of a central control device (21) in such a way
- that in a first control step displacement is carried out in order to bring about contact at the tread contact face (26) with a predetermined contact pressure which is sensed by measuring equipment, and
- that the pivoting can be carried out in at least one further control step.

## Revendications

1. Dispositif permettant d'optimiser l'appui d'un talon de pneu sur la jante
- avec au moins un réceptacle pour une roue de véhicule (16), préparée pour l'optimisation de l'appui d'un talon de pneu sur la jante, roue formée d'un bandage pneumatique et d'une jante, la roue de véhicule (16) étant montée de façon à pouvoir tourner dans le réceptacle,
- avec une base de roulement, réalisée sous la forme de roue de pressage (2), la roue de pressage (2) étant susceptible d'être entraînée à l'aide d'un entraînement de roue de pressage (12) pour assurer un mouvement en rotation,
- avec un agencement de l'axe de roue de pressage et de l'axe de roue de véhicule dans des plans chaque fois parallèles,
- avec un dispositif de déplacement (9) susceptible d'être commandé, pour effectuer le déplacement relatif entre la roue de pressage (2) et une roue de véhicule (16), sachant que, suite au déplacement, un contact est susceptible d'être établi sur une face de contact de roulement (26) entre la face de roulement de la roue de pressage (25) et la face de roulement de la roue de véhicule, la roue de véhicule (16) étant maintenue localement fixe pendant le processus d'optimisation, et où la roue de pressage (2) est déplaçable contre la roue de véhicule (16) au moyen du dispositif de déplacement (3),
**caractérisé**
- **en ce que** la roue de pressage (2) est susceptible de pivoter autour d'un axe de pivotement (22) à l'aide de dispositif de pivotement pouvant être commandé, l'axe de pivotement (22) étant orienté radialement par rapport à la roue de pressage (2) et vers la surface de contact de roulement (26).

2. Dispositif permettant d'optimiser l'appui d'un talon de pneu sur la jante selon la revendication 1, **caractérisé**
- **en ce que** la roue de pressage (2), avec l'entraînement de roue de pressage (12), est disposée dans le dispositif de pivotement réalisé sous la forme de partie de réceptacle à pivotement (9),
- **en ce que** la partie de réceptacle à pivotement (9) est susceptible de pivoter, à l'aide de galets (10), dans une coulisse de pivotement (11), sur une piste en segment de cercle, à l'aide d'un organe de réglage (23) pouvant être commandé, sachant que le centre de la piste en segment de cercle est situé sur l'axe de pivotement (22),
- **en ce que** la coulisse de pivotement (11) est disposée dans une partie de guidage de coulisse (8), à l'aide des galets (10) évoluant sur la piste en segment de cercle.

3. Dispositif permettant d'optimiser l'appui d'un talon de pneu sur la jante selon la revendication 1, **caractérisé**
- **en ce que** la roue de pressage (2), avec l'entraînement de roue de pressage (12), est disposée dans le dispositif de pivotement réalisé sous la forme de partie de palier de pivotement (27),
- **en ce que** la partie de palier de pivotement (27) est susceptible de pivoter autour d'un axe de palier de pivotement (28), à l'aide d'un organe de réglage (23) susceptible d'être commandé,
- **en ce que** l'axe de palier de pivotement (28), associé à la partie de palier de pivotement, est disposé perpendiculairement à l'axe de roue de pressage.

4. Dispositif permettant d'optimiser l'appui d'un talon de pneu sur la jante selon la revendication 2 ou 3, **caractérisé en ce que** l'organe de réglage (23), prévu pour le mouvement de pivotement de la partie de réceptacle à pivotement (9) ou de la partie de palier de pivotement (27), est réalisé sous la forme de dispositif à piston et cylindre, pneumatique ou hydraulique, susceptible d'être commandé.

5. Dispositif permettant d'optimiser l'appui d'un talon de pneu sur la jante selon la revendication 2 ou 3, **caractérisé en ce que** l'organe de réglage (23), prévu pour le mouvement pivotant de la partie de réceptacle de pivotement (9) ou de la partie de palier de pivotement (27), est réalisé sous la forme de dispositif à moteur électrique, susceptible d'être commandé.

6. Dispositif permettant d'optimiser l'appui d'un talon de pneu sur la jante selon l'une des revendications 1 à 5, **caractérisé en ce que** le dispositif de pivotement est disposé dans un dispositif de déplacement (3) déplaçable, le dispositif de déplacement (4) étant orienté perpendiculairement par rapport aux plans parallèles de l'axe de roue de pressage et de l'axe de roue de véhicule.

7. Dispositif permettant d'optimiser l'appui d'un talon de pneu sur la jante selon l'une des revendications 1 à 6, **caractérisé en ce que** le dispositif de déplacement (3) est réalisé sous la forme de chariot (5), déplaçable par rapport à un bâti de base (7), à l'aide d'un guidage à glissière latéral (6).

8. Dispositif permettant d'optimiser l'appui d'un talon de pneu sur la jante selon l'une des revendications 1 à 7, **caractérisé en ce que** le dispositif de pivotement est supporté dans le dispositif de déplacement (3), à l'aide de dispositifs dynamométriques (24) prévus pour détecter les efforts radiaux et axiaux, produits sur la roue de pressage (2).

9. Dispositif permettant d'optimiser l'appui d'un talon de pneu sur la jante selon l'une des revendications 1 à 8, **caractérisé en ce que** le dispositif de déplacement (3) et/ou le dispositif de pivotement est/sont soumis à une limitation de leurs débattements maximaux, à l'aide de butées mécaniques.

10. Dispositif permettant d'optimiser l'appui d'un talon de pneu sur la jante selon l'une des revendications 1 à 9, **caractérisé en ce que** la roue de pressage (2) est d'un diamètre au moins égal, de préférence supérieur, à celui de la roue de véhicule (16) à optimiser.

11. Dispositif permettant d'optimiser l'appui d'un talon de pneu sur la jante selon l'une des revendications 1 à 10, **caractérisé en ce qu'**au moins deux, de préférence, trois réceptacles sont prévus chaque fois pour une roue de véhicule (16), réceptacles reliés par l'intermédiaire d'un dispositif de transport (15), chaque réceptacle présentant un montage sur broche pour chaque fois une roue de véhicule (16), et l'axe de rotation de la roue de véhicule (16) étant alors orienté verticalement.

12. Dispositif permettant d'optimiser l'appui d'un talon de pneu sur la jante selon la revendication 11, **caractérisé en ce que** trois réceptacles sont prévus, chacun pour une roue de véhicule (13), pour trois processus opératoires différents, précisément dans l'ordre de succession de l'agencement sur le dispositif de transport (15), au poste I (17) l'équipement avec une roue (16) non optimisée, au poste II (18) l'optimisation de la roue de véhicule (16), et, au poste III (19), l'enlèvement de la roue de véhicule (16) optimisée.

13. Dispositif permettant d'optimiser l'appui d'un talon de pneu sur la jante selon la revendication 12, **caractérisé en ce que**, au poste II (18), pendant le processus d'optimisation, la roue de véhicule (16) est maintenue dans le réceptacle, de façon localement fixe et susceptible de pouvoir tourner, par l'intermédiaire d'un dispositif de fixation (20) pouvant être commandé.

14. Dispositif permettant d'optimiser l'appui d'un talon de pneu sur la jante selon la revendication 12 ou 13, **caractérisé en ce que** les postes I (17) à III (19) sont disposés de part et d'autre de la roue de pressage (2), sachant que la roue de pressage (2) est déplaçable de façon alternée entre les postes II (18), à l'aide du dispositif de déplacement (4).

15. Dispositif permettant d'optimiser l'appui d'un talon de pneu sur la jante selon l'une des revendications 1 à 14, **caractérisé**
**en ce que** la commande du dispositif permettant d'optimiser l'appui d'un talon de pneu sur la jante (1) se fait par l'intermédiaire d'un dispositif de commande (21) central, de manière
- que, en une première étape de commande, un déplacement visant à établir un contact sur la surface de contact de roulement (26) avec une pression de pressage déterminée, appréhendée par une technique de mesure, soit effectué, et
- que le pivotement est susceptible d'être effectué en au moins une autre étape de commande.
